Europäisches Patentamt

European Patent Office

Office européen des brevets

(11) Publication number: **0 063 469**

A1

# EUROPEAN PATENT APPLICATION

(21) Application number: 82301932.8

(22) Date of filing: 15.04.82

(51) Int. Cl.³: **B 29 H 7/14**
B 32 B 15/06, F 16 L 11/08

(30) Priority: 21.04.81 GB 8112359

(43) Date of publication of application:
27.10.82 Bulletin 82/43

(84) Designated Contracting States:
AT BE CH DE FR GB IT LI LU NL SE

(71) Applicant: DUNLOP LIMITED
Dunlop House Ryder Street St. James's
London SW1Y 6PX(GB)

(72) Inventor: Smith, John Liberty
19 Attleboro Lane
Water Orton Birmingham B46 15B(GB)

(74) Representative: Waller, Roy Ernest Sykes et al,
Group Patent Department Dunlop Limited 2 Parade
Sutton Coldfield West Midlands B72 1PF(GB)

(54) A composite article.

(57) In its broadest aspect the invention permits the production of a composite comprising natural or synthetic rubber and an epoxy resin which are brought together while the resin is in an uncured, liquid condition and the rubber is in an uncured condition. This is achieved by the interposition of a metal component (11) which is cleaned on both sides, a suitable metal-to-rubber bonding agent being applied to that side only of the metal component (11) presented to the rubber (10). Heat is now applied simultaneously to cure the resin (12), vulcanise the rubber (10) and bond both of them to the metal component (11).

The invention is of particular utility in providing a metal/epoxy resin composite pipe of the kind described in U K Patent Specification No 1 407 913 with a rubber lining (10). According to the present invention a rubber strip in an uncured condition is wound first on to a mandrel with edges (18) contiguous but not overlapping and preferably chamfered, as shown, so as to provide a scarf joint between successive turns, a first strip of metal is wound over the rubber (10) to provide a first metal layer (11) which has a metal-to-rubber bonding agent on its side presented to the rubber but is clean on its other side and thereafter successive layers of metal and epoxy resin are wound over the first metal layer (11). The outermost layer (13) may be of wound fibreglass or an additional rubber layer may provide the outer periphery of the pipe being formed in the same way as the layer (10).

After manufacture of the pipe it is subjected to heat which bonds the rubber (10) to the metal (11) and cures the resin (12) and bonds it to the other side of the metal (11) as well as hardening the remainder of the composite in accordance with U K Specification No 1 407 913.

FIG.1

## A COMPOSITE ARTICLE

This invention relates to a composite article and more particularly to a composite article which comprises a vulcanisable material and a thermosetting resin.

Examples of such composite articles are tubular products such as hose or pipes where it is desired to give to a tube having an outer sheath comprising a thermosetting resin an inner lining of a vulcanisable material such as natural or synthetic rubber. In the manufacturing process the two materials cannot be introduced to one another while both are in an uncured condition, e.g. by joint extrusion, because they would have what is effectively a fluid interface. In French Patent Specification No 2 403 882 and corresponding U S Patent Specification No 4 311 547 it is therefore proposed that in the manufacture of marine hose an extruded rubber tube is at least partially vulcanised before a resinous outer sheath is extruded on to it so that the vulcanised rubber lining will serve as a support for the resinous sheet. Numerous other proposals have been made for integrating a rubber with a plastics layer, e.g. according to U K Patent Specification No 1 522 240 by embedding the loops of a glass fibre interface in both the rubber and the plastics material, but this again requires a two stage manufacturing operation in which a vulcanised rubber lining with loops of glass fibre extending from it has applied to it a resinous sheath which bonds to the exposed portions of the glass fibre loops.

In its broadest aspect, therefore, the present invention provides a method of producing a composite article comprising components respectively of a vulcanisable material and of a thermosetting resin, wherein said components respectively in an unvulcanised and in an uncured condition are applied to opposite sides of a metal component which has on the side presented to the vulcanisable material a suitable bonding agent and heat is applied to the thus-formed composite simultaneously to vulcanise the first mentioned component and cure  the thermosetting resin component and bond both of them to the metal component. The metal component is preferably an imperforate, flat metal strip or sheet.

An application of the invention which is of particular utility is in the provision of pipe lines which comprise metal with an inner lining of natural or synthetic rubber. U K Patent Specification No 1 522 240 describes the advantages of providing steel pipes or tubes with inner linings of rubber for the sake of the superior resistance to wear and/or chemical resistance of such linings. A rubber lining can be expanded into contact with and adhered to the inner surface of a pre-formed pipe but a preferable technique is to extrude the rubber lining. Here, however, the problem arises that a different diameter extruder must used for pipes of different internal diameters.

In U K Patent Specification No 1 407 913 a technique is disclosed for manufacturing a pipe by helically winding onto a mandrel successive layers of steel and resin. By a suitable off-set of the turns of one steel layer relative to the adjacent layer or layers of steel a pipe is produced which is superior to an all-steel pipe in terms of weight reduction and economy in the use of steel without detriment to strength and providing improved flexural characteristics.

It has now been appreciated that by including the method of the present invention in the production of pipe generally in accordance with U K Patent Specification No 1 407 913 a pipe incorporating metal, and having similar characteristics and uses, can be given an inner lining of natural or synthetic rubber in a convenient manner which does not involve the problems either of expansion or extrusion of the rubber lining.

In accordance one application of the present invention, therefore, a lining of vulcanisable material in an unvulcanised state is applied to a mandrel, a metal strip coated on one side with a bonding agent is helically wound onto the lining so that the coated side is in contact with the lining, a layer of a thermosetting resin is applied to the other side of the metal strip and heat is applied to the thus formed composite simultaneously to vulcanise the lining, bond it to the metal strip and cure the resin layer. Additional metal strips may be helically wound over the first mentioned metal strip and in axially off-set relation, a resin layer being interposed between the successive layers of metal strip and providing an outer layer for the composite, preferably in accordance with the teachings of U K Patent Specification No 1 407 913.

The lining of vulcanisable material is preferably formed on the mandrel by helically winding thereon a strip of vulcanisable material so that the lateral edges of axially successive turns are in contact with no substantial overlap. If desired a second strip of vulcanisable material may be helically wound over the first mentioned strip but with opposite hand so that the edges of the second strip are in crossing relation with the edges of the first mentioned strip. A solvent may be applied to the vulcanisable material on the mandrel to cause fusion of the helical seam formed by the lateral edges of the or each strip of vulcanisable material and the edges of the or each rubber strip may be chamfered so that successive turns of the same strip form a scarf joint at the abutting edges. By this means, after the application of heat to vulcanise the rubber successive turns of the or each rubber strip are fused together so that the lining provides an uninterrupted rubber surface in the interior of the finished pipe which is not penetrated by the thermosetting resin while in a liquid condition.

It will be seen that by this technique the diameter of the rubber lining is determined by the diameter of the mandrel on which the pipe is constructed. In the semi-fluid condition of the unvulcanised rubber the contiguous edges will tend to merge and this tendency can be enhanced if the edges, and indeed the wound lining as a whole, are lightly treated with a solvent. Chamfering of the edges so as to form a scarf joint during winding enhances the impermeability of the thus formed rubber tube.

Subsequent to the formation of the rubber lining steel strip is helically wound onto it under tension, both sides of the strip having been cleansed and shot-blasted but that side only which will be contiguous with the vulcanisable lining being coated with a chemical bonding agent suitable for adhering rubber to steel such as that known as "CHEMLOK". The outer surface of the wound steel layer is coated with a thermosetting resin, such as an epoxy resin.. It will be noted that because the seams of the wound rubber lining are effectively closed they are not penetrated by the resin so that the inner surface of the formed pipe is wholly of rubber and contains no thermosetting resin. Thus the inner lining of the pipe is uninterrupted and wholly of rubber with the superior characteristics (e.g. abrasion-resistance and chemical resistance) obtainable with such a lining by comparison with a lining of thermosetting resin.

Any desired number of additional layers both of steel strip and thermosetting resin may be wound onto and applied to the first metal strip with the difference that all metal strips subsequent to the first may be coated on both sides with a thermosetting resin in accordance with the teachings of U K Specification No 1 407 913. A final, resin-rich outer layer may be applied to the product when the desired number of metal layers has been applied and this may impregnate a reinforcing fibreglass mat.

Alternatively if it is desired that the outer surface of the finished pipe as well as its inner surface should be of natural or synthetic rubber (e.g. to provide a more flexible and less brittle outer lining for the pipe less susceptible to fracture by impact forces) the or the final layer of helically wound metal strip may have an outer surface free of thermosetting resin but coated with a chemical bonding agent over which a final layer of vulcanisable material is applied by helically winding a strip thereof so that adjacent edges are substantially contiguous - or even overlapping since irregularity of the outer surface of the pipe may be unimportant. Compactation of the outer rubber surface may be brought about by over-wrapping with a suitable textile material under tension.

While still on the mandrel the formed pipe may be rotated in front of a bank of infra-red heaters causing simultaneously the cure of the thermosetting resin and vulcanisation of the rubber lining or linings. In this case the compound used for the inner lining of the pipe should be one capable of vulcanising at a relatively low temperature, e.g. 120°C. Alternatively, if it is desired to use for the inner rubber lining a compound which will vulcanise at a relatively higher temperature which cannot be achieved without exposure of the exterior of the pipe to excessive heat the mandrel could be heated by electrical inductance or the passage through it of a heated fluid.

Preferred embodiments of the present invention will now be described with reference to the accompanying diagrammatic drawings, in which:-

Figure 1 illustrates in side sectional elevation part of a first embodiment of a steel-reinforced pipe made in accordance with the invention,

Figure 2 is an end view of the pipe of Figure 1 with parts cut away to illustrate its formation,

Figure 3 schematically illustrates apparatus used in the manufacture of the pipe of Figures 1 and 2, and

Figure 4 is a view similar to Figure 1 of a second embodiment of a steel reinforced pipe made in accordance with the invention.

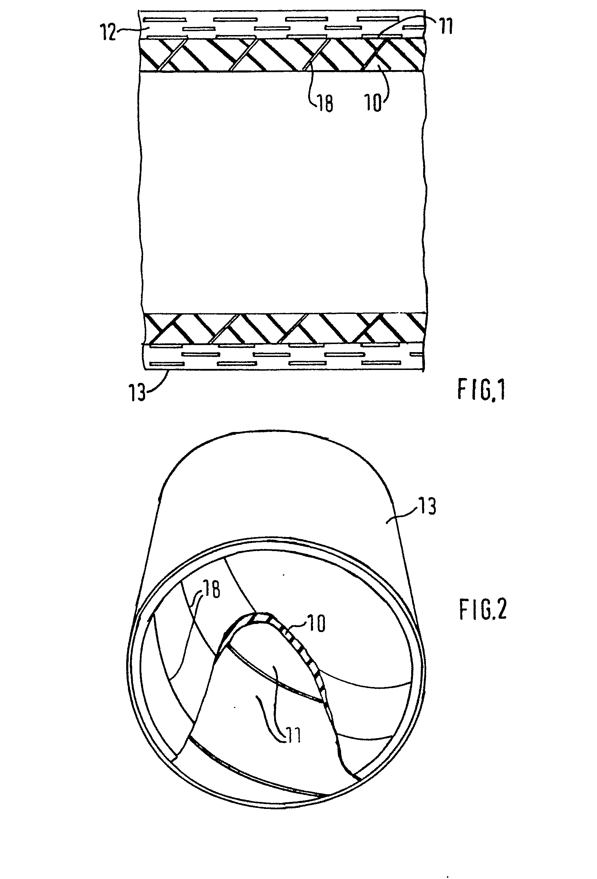

A steel mandrel 200 millimetres in external diameter was wrapped with a Melinex release film helically wound with approximately a 20% overlap. Steel strip of CSIB 51449, 0.38mm thick was cleaned and shot-blasted on both sides and coated on one side only with CHEMLOK 205/220 and allowed to dry for 10 minutes. Rubber compounded to vulcanise at a temperature in the region of 120°C was calendered to form a strip 2mm thick and approximately 250mm wide. A first layer of rubber 10 (Figure 1) was applied to the mandrel by winding the strip helically over the release film so that the strip edges 18 were substantially contiguous and these edges were then lightly wiped with a Naptha solvent. The whole outer surface of the rubber helix 10 was then also wiped with Naptha.

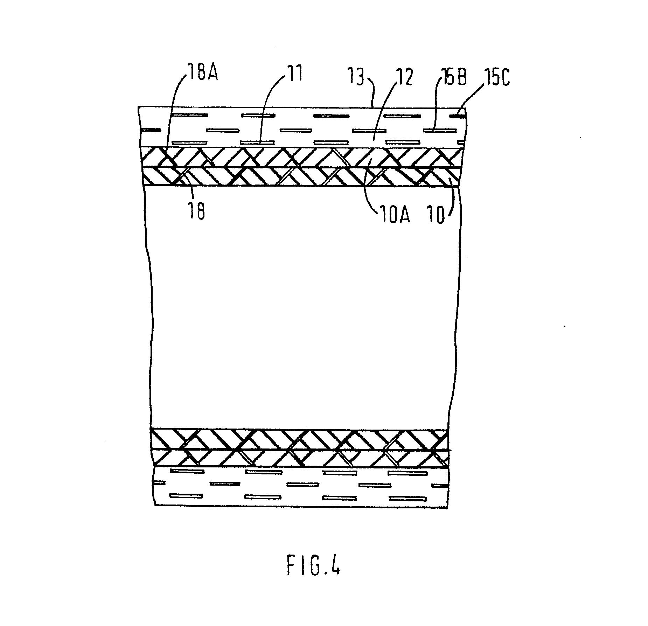

According to a second embodiment of the invention illustrated in Figure 4 a second helical winding 10A of the same rubber strip as the first strip 10 was applied to the mandrel 14 over the first layer 10 but wound with opposite hand so that the chamfered edges 18A of the second layer were in crossing relation with those 18 of the first layer 10. Again the contiguous edges 18A of the second rubber layer 10A were wiped with Naptha and entrapped air pockets were eliminated by pricking the rubber strip and rollering the lining 10,10A on the mandrel.

A steel strip 11 was now firmly clamped to a head stock of the mandrel and helically wound under tension over the rubber lining 10 or 10 and 10A so that the side of the metal strip 11 coated with the CHEMLOK bonding agent was presented to the rubber lining 10 or 10 and 10A. A tension was maintained throughout the winding of the steel strip 11 which was wound so that the edges of adjacent turns did not overlap but were substantially contiguous. The steel strip was firmly clamped at the tail stock end of the mandrel and thereafter the outer (uncoated) surface of the steel strip 11 was coated with a epoxy resin 12 in an uncured state. Further steel strip and epoxy resin layers 15B and 15C were subsequently applied according to the teachings of Patent Specification No 1 407 913 and the pipe was given a final, outer surface 13 of cloth impregnated with epoxy resin.

Subsequent to building the pipe on the mandrel it was rotated on the mandrel in front of a 30 Kw infra-red heater for 90 minutes. After cooling for 30 minutes the mandrel was extracted from the pipe and the scrap ends of the pipe cut off using a fine toothed saw blade.

It was found that during the heating of the pipe on the mandrel the rubber lining 10 or 10 and 10A maintained a temperature in the rgion of $120^{o}C$ for approximately 30 minutes. This was sufficient fully to vulcanise the rubber lining 10 or 10 and 10A and bond it to the inner steel layer 11. Furthermore the resin 12 incorporated in the outer layers 15B,15C had not penetrated the seams 18 or 18 and 18A of the rubber lining 10 or 10 and 10A because these had fused together by natural merging followed by vulcanisation.

A pipe was produced having the advantageous properties of a rubber inner lining which was less costly to manufacture than a pipe of comparable wall thickness consisting wholly of steel and resin both because it·was less labour-intensive and because the rubber component was cheaper than a comparable thickness of steel and epoxy resin. Comparative tests have shown that a pipe constructed as above shows an ability to be deflected without fracture to a greater extent than a pipe of similar wall thickness made wholly of steel and epoxy resin.

An abrasion test has produced the following results. A conventional abrasion machine was used the drum of which was covered with 60 grade emery paper and rotated at 40 rpm. A test sample 16mm diameter x 9mm thick was fitted into the holder so that the surface of the sample to be abraded projected 2mm below the holder. The sample was then lowered onto the drum and the machine started. Abrasion was measured by the weight loss incurred after the sample had covered a spiral path of 15m around the surface of the drum at a sliding velocity of 27cm/sec. The sample was automatically moved across the surface of the drum to ensure that it did not travel continuously over the same region of emery paper. To avoid abrasion in one direction only the test piece was rotated slowly·about its own axis during its movement across the drum. Four test pieces for each system were used and the results averaged:

|    |                                | Wt loss g | Abrasion index |
|----|--------------------------------|-----------|----------------|
| 1) | Natural rubber control sample  | 0.0529    | 100            |
| 2) | DS 2864/C lining compound      | 0.0536    | 99             |
| 3) | Lower grade epoxy composition  | 0.3040    | 17             |
| 4) | Higher grade epoxy composition | 0.1914    | 28             |

In the above Example (2) is a rubber chosen as suitable for making the lining 10 or 10 and 10A; while (3) and (4) are examples of resins used in putting into practice the teachings of U K Patent Specification No 1 407 913 and which therefore represent the inner surface of a composite pipe unlined with rubber.   It will be seen that the abrasion index of the rubber lining in accordance with the present invention is almost the same as that of the natural rubber control sample and very superior to even the higher grade epoxy composition.

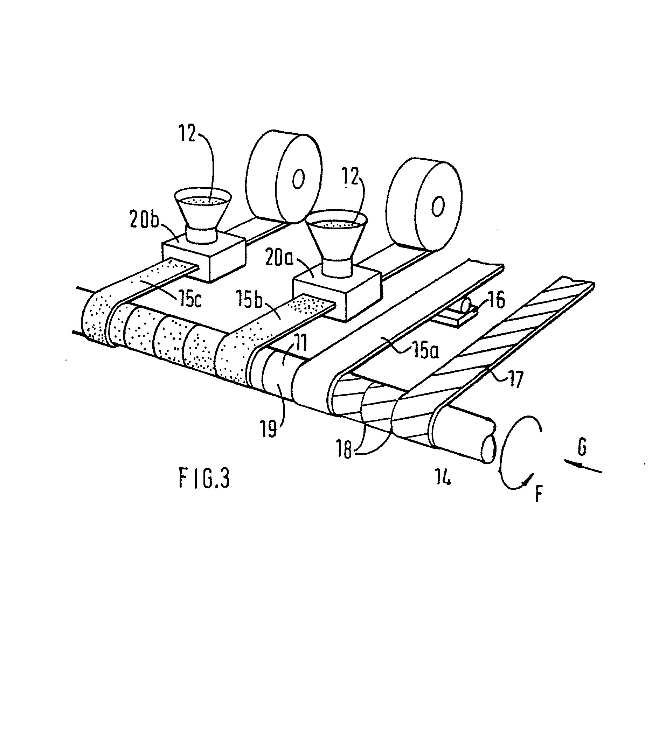

Figure 3 illustrates in a very diagrammatic form apparatus whereby a lined pipe according to Figures 1 and 2 may be produced.  A mandreI 14 is rotated at a suitable speed in the sense indicated by the arrow F while displaced axially at a suitable speed in the direction of the arrow G. A strip 17 of unvulcanised natural or synthetic rubber calendered to have chamfered edges 18 is wound onto the mandrel 14 so that the edges 18 of successive turns do not overlap but are substantially contiguous, forming a scarf joint as illustrated in Figure 1.  There is next wound on to the mandrel 14 over the rubber lining 10 a steel strip 15A which has been cleaned on both sides but to the underside of which a bonding agent such as "CHEMLOK" is applied by an applicator 16.  As shown the applicator 16 is relatively close to the mandrel 14 so that to ensure that the bonding agent applied to the underside of the strip 15A is in proper condition when it makes contact with the rubber lining 10 its drying may be accelerated by a suitably positioned jet of hot air (not shown) The winding of the first metal strip 15A to form the innermost metal layer 11 is generally in accordance with the teachings of U K Patent Specification No 1 407 913, i.e. successive turns do not overlap but are almost contiguous. Second and third metal layers 15B and 15C are wound over the inner metal lining 11 in turn with mutual axial off-set in accordance with the teachings of U K Patent Specification No 1 407 913 but whereas the first metal strip 15A is clean on its upper side and has a metal-to-rubber bonding agent on its underside each of the successive metal strips 15B and 15C is wholly coated with a resinous composition in liquid form, the metal strips 15B and 15C passing through respective resin applicators 20A and 20B en route to the mandrel 14.   Each successive metal strip 15B and 15C being coated on its upper and lower sides and on both edges, the resin on the underside of the strip 15B provides a continuous layer of resin over the whole radially outer surface of the inner metal lining 11 filling the interstices between successive turns of the lining 11 but not penetrating the rubber lining 10 because of fusion of the edges 18 of successive turns of the strip 17.

It will be seen that any desired number of additional metal strips may be applied as well as a final winding e.g. of glass fibres or an outer layer or layers of unvulcanised rubber (not shown).

After completion of the pipe heat is applied in a manner suitable to the composition of the pipe simultaneously to cure the resin and vulcanise the rubber. This will at the same time bond the rubber lining 10 or 10 and 10A to the inner metal layer 11 and bond the resin 12 to the metal layer 11 as well as to the successive metal layers.

The manner of applying heat will be suitable to the composition of the pipe. A bank of infra-red heaters may be positioned adjacent the pipe while it is being rotated on the mandrel 14 or heating could be effected by induction or, subsequent to removal of the mandrel 14 from the finished pipe, heating could be effected by the passage of a heated fluid through the pipe. Removal of the mandrel 14 from the completed pipes is facilitated, in known manner, by the interposition of a suitable release agent, such as Melinex film (not shown) between the mandrel 14 and the rubber lining 10.

CLAIMS:

1. A method of producing a composite article comprising components respectively of a vulcanisable material (10) and of a thermosetting resin (13) <u>characterised in that</u> the components (10,13) respectively in an unvulcanised and in an uncured condition are applied to opposite sides of a metal component (11) which has on the side presented to the vulcanisable material (10) a suitable bonding agent and heat is applied to the thus-formed composite simultaneously to vulcanise the first-mentioned component (10) and cure the thermosetting resin component (13) and bond both of them to the metal component (11).

2. A method as claimed in claim 1, <u>characterised in that</u> the metal component (11) is an imperforate, flat metal strip or sheet (15A).

3. A method as claimed in claim 1 or claim 2 for the production of a composite tubular article, <u>characterised in that</u> a lining (10 or 10 and 10A) of vulcanisable material in an unvulcanised state is applied to a mandrel (14), a metal strip (11) coated on one side with a bonding agent is helically wound onto the lining (10 or 10 and 10A) so that the coated side is in contact with the lining (10 or 10 and 10A), a layer of a thermosetting resin (13) is applied to the other side of the metal strip (11) and heat is applied to the thus-formed composite simultaneously to vulcanise the lining (10 or 10 and 10A), bond it to the metal strip (11) and cure the resin layer (13).

4. A method as claimed in claim 3, <u>characterised in that</u> one or more additional metal strips (15B,15C) are helically wound over the first-mentioned metal strip (15A) and in axially off-set relation, a resin layer (12) being interposed between the successive layers of metal strip (15A,15B,15C) and providing an outer layer (13) for the composite.

5. A method as claimed in claim 3 or claim 4 <u>characterised in that</u> the lining of vulcanisable material (10) is formed on the mandrel by helically winding thereon a strip (17) of vulcanisable material so that the lateral edges of axially successive turns are in contact with no substantial overlap.

0063469

6.      A method as claimed in claim 5 <u>characterised in that</u> a second strip (10A) of vulcanisable material is helically wound over' the first-mentioned strip (10) of vulcanisable material but with opposite hand so that the edges (18A) of the second strip (10A) are in crossing relation with the edges of the first-mentioned strip (10).

7.      A.method as claimed in claim 5 or claim 6, <u>characterised</u> in that a solvent is applied to the vulcanisable material (10 or 10 and 10A) on the mandrel to cause fusion of the helical seam formed by the lateral edges (18 or 18 and 18A) of the or each strip (10,10A) of vulcanisable material.

8.      A method as claimed in any one of claims 5-7, <u>characterised in that</u> the edges (18,18A) of the or each rubber strip (10,10A) are chamfered so that successive turns of the same strip (10,10A) form a scarf joint at the abutting edges (18,18A).

9.      A composite article <u>characterised in that it comprises</u> an imperforate metal component (11) having bonded to opposite sides thereof a layer of heat-vulcanised material (10) and a layer of a heat-cured thermosetting resin (12).

10.     A tubular composite article <u>characterised in that it</u> <u>comprises</u> a helically wound inner lining (10 or 10 and 10A) of vulcanised material bonded to a layer (11) of helically wound metal strip which is bonded on the side thereof remote from the inner lining (10 or 10 and 10A) to a layer (12) of a cured thermosetting resin.

FIG.1

FIG.2

FIG.3

18A  11  13  12  15B  15C

18  10A  10

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 905 853 (DENIS)<br><br>* column 6, line 48 - column 9, line 14 * | 1-4,9,<br>10 | B 29 H 7/14<br>B 32 B 15/06<br>F 16 L 11/08 |
| Y |  | 3,5-10 |  |
| Y | US-A-3 957 085 (BALL)<br><br>* column 1, line 56 - column 2, line 20 * | 3,5,6,<br>8,10 |  |
| D,Y | GB-A-1 522 240 (EKSTROM)<br>* page 2, lines 106-130 * | 7 |  |
| Y | US-A-3 549 180 (MacWILLIAM)<br>* column 1, lines 7-13; column 2, lines 8-34; figure 2 * | 9 | TECHNICAL FIELDS SEARCHED (Int. Cl. ³) |
| D,X | FR-A-2 403 882 (DUNLOP)<br><br>* page 2, line 14 - page 4, line 29; page 6, line 22 - page 7, line 12; page 9, line 5 - page 10, line 16; page 11, line 5 - page 12, line 7 * & US - A - 4 311 547 | 1,3,9,<br>10 | F 16 L<br>B 29 H<br>B 32 B |
| X | US-A-4 205 034 (NEWBERRY)<br>* column 2, line 15 - column 4, line 56 * | 1,3 |  |
|  | -/- |  |  |

The present search report has been drawn up for all claims

| Place of search | Date of completion of the search | Examiner |
|---|---|---|
| THE HAGUE | 09-07-1982 | ATKINS J.F.C. |

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A- 876 937 (GASKET CO.) * page 2, lines 94-109; page 3, lines 40-84; page 4, lines 80-93, 109-119 * | 1,2,9 | |
| A | DESIGN ENGINEERING, mid May 1978, London (GB) "Large diameter piper boast 50% weight saving", page 11 * the whole article * | 1,3,4 | |
| A | US-A-2 676 127 (HANSEN) * column 2, lines 9-42 * | 1,8 | |
| A | GB-A-1 205 450 (DUNLOP) * page 2, lines 43-53 * | 1 | |
| A | GB-A- 604 834 (MEYRICK) * page 2, lines 38-70 * | 7 | TECHNICAL FIELDS SEARCHED (Int. Cl. 3) |

The present search report has been drawn up for all claims

| Place of search | Date of completion of the search | Examiner |
|---|---|---|
| THE HAGUE | 09-07-1982 | ATKINS J.F.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82